**Europäisches Patentamt**

**European Patent Office**

**Office européen des brevets**

(19)

(11) Veröffentlichungsnummer : **0 110 289**
**B1**

(12) # EUROPÄISCHE PATENTSCHRIFT

(45) Veröffentlichungstag der Patentschrift :
28.05.86

(21) Anmeldenummer : 83111637.1

(22) Anmeldetag : 22.11.83

(51) Int. Cl.⁴ : **F 16 K 15/04, F 15 B 13/02**

(54) **Ausgleichventil.**

(30) Priorität : 06.12.82 US 446882

(43) Veröffentlichungstag der Anmeldung :
13.06.84 Patentblatt 84/24

(45) Bekanntmachung des Hinweises auf die Patenterteilung : 28.05.86 Patentblatt 86/22

(84) Benannte Vertragsstaaten :
AT BE CH DE FR GB IT LI NL SE

(56) Entgegenhaltungen :
AU-B- 141 469
DE-B- 1 224 577
FR-A- 2 081 122
US-A- 1 409 116
US-A- 2 774 369

(73) Patentinhaber : **DEERE & COMPANY**
**1 John Deere Road**
**Moline Illinois 61265 (US)**

(72) Erfinder : **Eagles, Derek Malcolm**
**107 Rebecca Rd.**
**Hudson Iowa 50643 (US)**
Erfinder : **Miller, James Anton**
**1727 Four Winds Dr.**
**Cedar Falls Iowa 50613 (US)**

(74) Vertreter : **Feldmann, Bernhard et al**
**DEERE & COMPANY European Office, Patent Depart-**
**ment Steubenstrasse 36-42 Postfach 503**
**D-6800 Mannheim 1 (DE)**

## Beschreibung

Die Erfindung bezieht sich auf ein Ausgleichventil mit einer Ventilbohrung, an die eine erste Leitung sowie beiderseits dieser mit gegenseitigem Abstand eine zweite und dritte Leitung angeschlossen sind und in der beiderseits der ersten Leitung je ein den Fluß eines Druckmediums von der zweiten und dritten Leitung zur ersten Leitung zulassendes bzw. unterbindendes Ventil mit gegen Ventilsitze am Ende der zweiten und dritten Leitung zur Anlage kommenden Verschlußelementen vorgesehen ist, die wechselseitig gegen einen in der Ventilbohrung verschiebbar angeordneten, einen Zylinderteil aufweisenden Distanzhalter anliegen können, der im Bereich seiner stirnseitigen Enden mit mindestens drei sich vom Zylinderteil (32, 32', 32'') radial nach außen erstreckenden Teilen zum Ausrichten des Distanzhalters in der Ventilbohrung versehen ist.

Bei diesem Ausgleichventil (US-A-1 409 116) ist die Normallage die Vertikale, so daß unter der Wirkung der Schwerkraft die als Kugel ausgebildeten Verschlußelemente schließen bzw. öffnen. In der Horizontallage können beide Verschlußelemente offen sein und nur aufgrund unterschiedlicher Druckverhältnisse geschlossen bzw. geöffnet werden. Sogenannte Stopplatten sind vorgesehen, um ein unkontrolliertes Hin- und Herlaufen der Kugeln in den Leitungen zu verhindern. Hinzu kommt, daß die Radialteile als im Querschnitt dreieckförmig ausgebildete Nasen geformt sind, deren Spitzen gegen den Innenmantel der Ventilbohrung anliegen, wodurch der Durchflußquerschnitt für das Druckmedium stark begrenzt wird und sich im Bereich der Ventilsitze Schleifrillen bilden, die ein betriebssicheres Schließen der Kugeln beeinträchtigen.

Aus der AU-B-141 469 ist es bei einem anderen Ausgleichventil bekannt, die Verschlußelemente mit Federn zu belasten, wobei die Federkräfte unterschiedlich sind.

Die mit der Erfindung zu lösende Aufgabe wird darin gesehen, das Ausgleichventil betriebssicher auszubilden, wobei ein möglichst großer Druckeinlaßquerschnitt für das Druckmedium geschaffen wird.

Diese Aufgabe ist gemäß der Erfindung dadurch gelöst worden, daß die Verschlußelemente über je eine Feder in Richtung auf die Ventilsitze belastbar sind und die Radialteile als Flügel mit parallelen Seitenflächen und/oder als Radialstifte ausgebildet sind, wobei im Bereich der Stirnenden des Distanzhalters in die Oberkanten der Flügel Aussparungen eingearbeitet und/oder die Stirnenden des Zylinderteils ballig ausgebildet sind, wobei bei nicht balliger Ausbildung der Stirnenden die Radialstifte (34') in einem Abstand von den Stirnenden des Zylinderteils (32') angeordnet sind. Auf diese Weise entsteht durch die besondere Anordnung der Radialteile ein den Durchfluß des Druckmediums nicht behindernder Durchlaßquerschnitt, der über die Federn zuverlässig verschlossen werden kann, wobei im Bereich der Ventilsitze keine Schleifrillen entstehen und eine Gratbildung ebenfalls verhindert ist, so daß sich im Ganzen gesehen eine auch über lange Einsatzzeit noch betriebssichere Ausbildung ergibt.

Damit die Druckleitung, in der der geringere Flüssigkeitsdruck herrscht, mit dem Verbraucher verbunden ist, wird nach der Erfindung vorgeschlagen, daß die Federn unterschiedliche Federkräfte aufweisen.

Dadurch daß im Bereich der Stirnenden des Distanzhalters in die Oberkanten der Flügel der Radialteile Aussparungen eingearbeitet sind und/oder daß die Stirnenden des Zylinderteils ballig ausgebildet sind, wird erreicht, daß sich im Bereich der Ventilsitze keine Rillen oder Grate bilden, die ein sicheres Abdichten beeinträchtigen könnten.

In der Zeichnung ist ein nachfolgend näher erläutertes Ausführungsbeispiel der Erfindung dargestellt. Es zeigt :

Figur 1 ein Ausgleichventil im Querschnitt ;

Figur 2 einen Distanzhalter in perspektivischer Darstellung ;

Figur 3 den Distanzhalter in einer anderen Ausführung ;

Figur 4 den Distanzhalter in einer weiteren Ausführung.

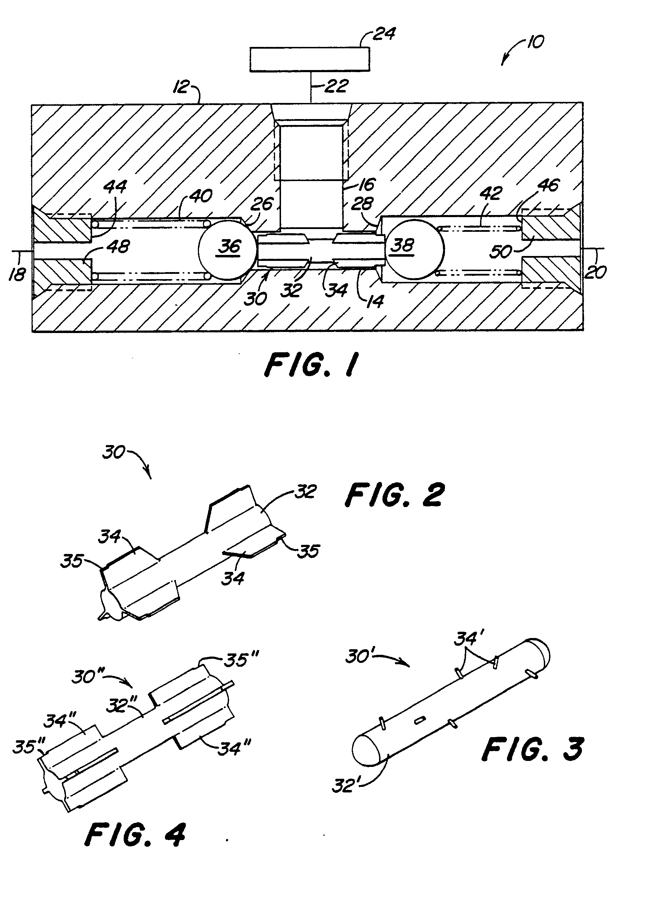

Das in Figur 1 dargestellte Ausgleichventil 10 weist einen Ventilkörper 12 auf, in dem eine längs verlaufende erste Ventilbohrung 14 eingearbeitet ist, die etwa in ihrer Mitte von einer zweiten Ventilbohrung 16 geschnitten wird. An die Enden der ersten Ventilbohrung 14 sind zwei in den Ansprüchen als zweite und dritte Leitung bezeichnete Druckleitungen 18 und 20 angeschlossen, und die zweite Ventilbohrung 16 ist an ihrem der ersten Ventilbohrung 14 abgelegenen Ende über eine erste Leitung oder eine Ausgangsleitung 22 mit einem Verbraucher 24 verbunden. Die erste Ventilbohrung 14 ist ferner derart ausgebildet, daß sie beiderseits der Eintrittsstelle der zweiten Ventilbohrung 16 zwei Ventilsitze 26 und 28 aufweist, zwischen denen sich ein Distanzhalter 30 befindet. Dieser hat eine Länge über alles, die dem Abstand zwischen den beiden Ventilsitzen 26 und 28 entspricht. Seine Länge kann aber auch etwas größer oder auch kleiner als der Abstand sein. Es soll jedenfalls sichergestellt sein, daß die die Ventilsitze verschließenden Verschlußelemente nicht gleichzeitig beide Ventilsitze verschließen. Der Distanzhalter 30 selbst ist aus einem sich längs erstreckenden Zylinderteil 32 gebildet, der auf seiner Mantelfläche Radialteile 34 aufweist. Im einzelnen sind an den Enden des Zylinderteils 32 jeweils drei umfangsmäßig gleichen Abstand aufweisende und sich parallel zur Längsmittelachse des Zylinderteils erstreckende Radialteile 34 in Form von Flügeln mit parallelen Seitenflächen vorgesehen. Die Flügel 34 an einem Ende des Zylinderteils 32 sind zu denen am anderen Ende des Zylinderteils ausgerichtet und ihre jeweilige Länge ist derart, daß sie vor der Längsmitte des Zylinderteils 32 enden. Die Höhe der Flügel 34 ist so gewählt, daß der Distanzhalter in der ersten Ventilbohrung 14 noch verschiebbar ist. Dadurch ist der Distanzhalter 30 zur ersten Ventilbohrung 14 ausgerichtet und ein Verkanten innerhalb der ersten Ventilbohrung 14 wird vermieden, wobei zwischen benachbarten Flügeln 34 ausreichend Freiraum zum Durchtritt von Flüssigkeit bestehen bleibt. Weiterhin sind an den außenliegenden Enden der jeweiligen Flügel 34 noch Aussparungen 35 eingearbeitet, so daß die Flügel 34 in ihrem Endbereich eine geringere Höhe als der übrige Bereich aufweisen, wodurch verhindert wird, daß im Bereich der Ventilsitze 26 und 28 Schleifrillen entstehen oder eine Gratbildung, die ein betriebssicheres Schließen der Verschlußelemente beeinträchtigen würden. Die Verschlußelemente sind beim Ausführungsbeispiel als Ventilkugeln 36 und 38 ausgebildet. Hinzu kommt, daß infolge der Aussparungen die Flügel 34 im Bereich der Ventilsitze im Regeleinsatz Abstand zu der ersten Ventilbohrung 14 aufweisen, das heißt, ihre Innenwandung dort nicht berühren. Da die in Figur 2 wiedergegebenen Flügel 34 nur an den Außenseiten des Zylinderteils 32 vorgesehen sind, beeinträchtigen sie nicht den Durchfluß von unter Druck stehender Flüssigkeit zwischen der ersten und zweiten Ventilbohrung 14 und 16.

Die in den Figur 3 und 4 dargestellten Distanzhalter haben dieselbe vorteilhafte Wirkung, wie der nach Figur 2. Der in Figur 3 wiedergegebene Distanzhalter 30′ ist ebenfalls mit einem Zylinderteil 32′ versehen, der insoweit zu dem nach Fig. 2 einen Unterschied aufweist, daß er ballige Stirnenden aufweist. Die Radialteile 34′ sind als mehrere auf dem Umfang verteilte radial abstehende Stifte ausgebildet, die derart angeordnet sind, daß der Distanzhalter 30′ im Einsatz zur Längsmittelachse der ersten Ventilbohrung 14 ausgerichtet ist.

Der Distanzhalter 30″ nach Figur 4 entspricht im wesentlichen dem Distanzhalter nach Figur 2 mit dem Unterschied, daß acht Flügel 34″ mit Aussparungen 35″ auf dem Zylinderteil 32″ angeordnet sind.

Bei den in den Figur 2 und 4 dargestellten Distanzhaltern 30 bzw. 30″ weisen die Zylinderteile 32 bzw. 32″ ebene, also nicht ballige Stirnenden auf, während bei dem in Figur 3 dargestellten Distanzhalter 30′ das Zylinderteil 32′ ballige Stirnenden aufweist.

Die vorstehend beschriebenen Ausführungsformen der einzelnen Distanzhalter können miteinander kombiniert werden.

Die Ventilkugeln 36 und 38 liegen an den sich gegenüberliegenden Seiten des Distanzhalters 30, 30′ oder 30″ an und werden über eine erste und zweite Feder 40 und 42 in Richtung auf ihre Ventilsitze 26 und 28 gedrückt. Dabei liegen die äußeren Enden der Federn 40 und 42 gegen Innenflächen 44 und 46 von Stopfen 48 und 50 an. Letztere können in das Ventilgehäuse 12 im Bereich der ersten Ventilbohrung 14 eingeschraubt werden, so daß das Einsetzen und gegebenenfalls das Auswechseln des Distanzhalters, der Ventilkugeln und der Federn leicht bewerkstelligt werden kann.

Die Federkraft der ersten Feder 40 ist etwas größer als die der zweiten Feder 42. Dadurch wird die Ventilkugel 36 auf ihren Ventilsitz 26 gedrückt, sofern in den Druckleitungen 18 und 20 gleiche Druckverhältnisse herrschen. Wie aus Figur 1 zu ersehen ist, weist die Feder 40 einen größeren Außendurchmesser als die Feder 42 bei gleicher entspannter Federlänge auf, wodurch auf die unterschiedlichen Federkräfte hingewiesen werden soll. Wenn nun die Ventilkugel 36 gegen ihren Ventilsitz 26 anliegt, hat der Distanzhalter 30, 30′ oder 30″ die Ventilkugel 38 von ihrem Ventilsitz 28 abgehoben. Dadurch kann Flüssigkeit aus der Druckleitung 20 um die Ventilkugel 38 und den Distanzhalter herum durch die zweite Ventilbohrung 16 und die Ausgangsleitung 22 zu dem Verbraucher 24 gelangen. Das Ausgleichventil 10 wird in dieser Position verharren, bis der Flüssigkeitsdruck in der Druckleitung 20 größer wird als der in der Druckleitung 18 und zusammen mit der Feder 42 in der Lage ist, die Ventilkugel 36 von ihrem Ventilsitz 26 abzuheben. Dann wird sich die Ventilkugel 38 mit Bezug auf Figur 1 nach links in Richtung auf ihren Ventilsitz 28 bewegen und diesen gegebenenfalls ganz verschließen und gleichzeitig über den Distanzhalter 30, 30′ oder 30″ die Ventilkugel 36 von ihrem Ventilsitz 26 abheben. Die Zeitspanne, die zum Aufsetzen der Ventilkugel 38 auf ihren Ventilsitz 28 und zum Abheben der Ventilkugel 36 von ihrem Ventilsitz 26 erforderlich ist, beträgt nur den Bruchteil einer Sekunde. Während dieser Zeitspanne besteht eine Flüssigkeitsverbindung zwischen den Druckleitungen 18 und 20, jedoch ist ein eventueller Flüssigkeitsfluß dann so gering, daß die Funktion des Verbrauchers 24 nicht oder —wenn überhaupt— dann nur äußerst geringfügig beeinträchtigt wird.

Der Druck, der zum Verschieben der Ventilkugel 38 aus ihrer Offenstellung in ihre Schließstellung erforderlich ist, ist sehr gering im Vergleich zum Gesamtdruck, der von dem Ausgleichventil aufgenommen werden kann. Wenn beispielsweise der Druck in den Druckleitungen zwischen 0 und $276 \cdot 10^5$ Pa schwanken kann, beträgt der Druck, der zum Verschieben der Ventilkugel erforderlich ist nur $6{,}9 \cdot 10^5$ Pa.

Diese Ausbildung des Ausgleichventils 10 ermöglicht es, daß die Druckleitung, in der der geringere Flüssigkeitsdruck herrscht, mit dem Verbraucher verbunden ist. Dabei kann das Ausgleichventil 10 so ausgebildet werden, daß eine Ventilkugel nur schließt, wenn die Druckdifferenz einen vorherbestimmten Wert übersteigt. Dies kann dadurch erfolgen, daß die Kraft der Feder 40 einstellbar veränderbar ist, so daß die Ventilkugel, die mit dem in seiner Größe ansteigenden Druck beaufschlagt wird, nicht in ihre Schließstellung gelangt, bevor der vorherbestimmte
Wert überschritten ist.

**Patentansprüche**

1. Ausgleichventil (10) mit einer Ventilbohrung
(14), an die eine erste Leitung (22) sowie beiderseits dieser mit gegenseitigem Abstand eine
zweite und dritte Leitung (18, 20) angeschlossen
sind und in der beiderseits der ersten Leitung (22)
je ein den Fluß eines Druckmediums von der
zweiten und dritten Leitung (18, 20) zur ersten
Leitung (22) zulassendes bzw. unterbindendes
Ventil mit gegen Ventilsitze (26, 28) am Ende der
zweiten und dritten Leitung (18, 20) zur Anlage
kommenden Verschlußelementen (36, 38) vorgesehen ist, die wechselseitig gegen einen in der
Ventilbohrung (14) verschiebbar angeordneten,
einen Zylinderteil (32, 32', 32") aufweisenden
Distanzhalter (30, 30', 30") anliegen können, der
im Bereich seiner stirnseitigen Enden mit
mindestens drei sich vom Zylinderteil (32, 32',
32") radial nach außen erstreckenden Teilen (34,
34', 34") zum Ausrichten des Distanzhalters (30,
30', 30") in der Ventilbohrung versehen ist, dadurch gekennzeichnet, daß die Verschlußelemente (36, 38) über je eine Feder (40, 42) in
Richtung auf die Ventilsitze (26, 28) belastbar
sind und die Radialteile (34, 34', 34") als Flügel
mit parallelen Seitenflächen und/oder als Radialstifte ausgebildet sind, wobei im Bereich der
Stirnenden des Distanzhalters (30, 30', 30") in die
Oberkanten der Flügel (34, 34") Aussparungen
(35, 35") eingearbeitet und/oder die Stirnenden
des Zylinderteils (32') ballig ausgebildet sind,
wobei bei nicht balliger Ausbildung der
Stirnenden die Radialstifte (34') in einem Abstand von den Stirnendenden des Zylinderteils
(32') angeordnet sind.

2. Ausgleichventil nach Anspruch 1, dadurch
gekennzeichnet, daß die Federn (40, 42) unterschiedliche Federkräfte aufweisen.

**Claims**

1. Equalizing valve (10) having a bore (14) to
which a first line (22) and, on both sides of the
latter at a mutual distance, a second and third line
(18, 20) are connected and in which bore, on both
sides of the first line (22), a valve allowing and
preventing the flow of a pressure medium from
the second and third lines (18, 20) to the first line
(22) is provided in each case, these valves having
closure elements (36, 38) coming into abutment
against valve seats (26, 28) at the end of the
second and third lines (18, 20) and which can
bear alternately against a spacer (30, 30', 30")
slidably arranged in the valve bore (14) and
having a cylindrical portion (32, 32', 32"), the
spacer being provided in the region of its end
faces with at least three parts (34, 34', 34") extending radially outwards from the cylindrical
portion (32, 32', 32") for aligning the spacer (30,
30', 30") in the valve bore, characterised in that
the closure elements (36, 38) can each be loaded
by means of a spring (40, 42) towards the valve
seats (26, 28) and the radial parts (34, 34', 34")
are in the form of vanes with parallel side faces
and/or of radial pins, cutaways (35, 35") being
worked into the top edges of the vanes (34, 34") in
the region of the end faces of the spacer (30, 30',
30") and/or the end faces of the cylindrical portion (32') being of convex form, while if the end
faces are of non-convex form the radial pins (34')
are arranged at a distance from the end faces of
the cylindrical portion (32').

2. Equalizing valve according to claim 1,
characterised in that the springs (40, 42) have
different forces.

**Revendications**

1. Valve d'équilibrage (10), comportant un alésage (14) auquel sont raccordés un premier
conduit (22) ainsi que, de chaque côté de celui-ci
et selon un écartement relatif, un second et un
troisième conduits (18, 20), et dans laquelle il est
prévu, de part et d'autre du premier conduit (22),
chaque fois une soupape permettant ou empêchant l'écoulement d'un fluide sous pression du
second et du troisième conduits (18, 20) vers le
premier conduit (22), ces soupapes comprenant
des éléments obturateurs (36, 38) venant dans
une position d'application contre des sièges de
soupapes (26, 28) prévus à l'extrémité des second
et troisième conduits (18, 20), ces éléments obturateurs pouvant venir s'appliquer de façon alternée contre une pièce-entretoise (30, 30', 30")
présentant une partie cylindrique (32, 32', 32") et
montée de façon coulissante dans l'alésage (14)
de la valve, cette pièce-entretoise étant munie, au
voisinage de ses extrémités d'au moins trois
parties (34, 34', 34") s'étendant radialement vers
l'extérieur depuis la partie cylindrique (32, 32',
32") pour l'alignement de la pièce-entretoise (30,
30', 30") dans l'alésage de la valve, caractérisée
en ce que les éléments obturateurs (36, 38)
peuvent être sollicités chaque fois par l'intermédiaire d'un ressort (40, 42) en direction des sièges
de soupapes (26, 28), et en ce que les parties
radiales (34, 34', 34") se présentent sous la forme
d'ailettes munies de faces latérales parallèles
et/ou de doigts radiaux, des évidements (35, 35',
35") étant ménagés au voisinage des faces terminales de la pièce-entretoise (30, 30', 30") dans les
bords supérieurs des ailettes (34, 34") et/ou les
faces terminales de la partie cylindrique (32')
ayant une forme bombée, et lorsque les faces
terminales n'ont pas une forme bombée, les
doigts radiaux (34') étant écartés des faces terminales de la partie cylindrique (32').

2. Valve d'équilibrage suivant la revendication
1, caractérisée en ce que les ressorts (40, 42) ont
des forces différentes.

FIG. I

FIG. 2

FIG. 3

FIG. 4